# EUROPEAN PATENT APPLICATION

(11) **EP 2 517 612 A1**
(43) Date of publication of application: **31.10.2012**
(21) Application number: 10838985.9
(22) Date of filing: 24.12.2010
(51) Int. Cl.: A47L 15/46, A47L 15/42, F24H 1/18

(54) **CLEANING APPARATUS AND CLEANING METHOD**

(30) Priority: 25.12.2009 JP 2009295147
(71) Applicant: Panasonic Corporation, Kadoma-shi Osaka 571-8501 (JP)
(72) Inventor: TSUJIMURA, Satoshi, Chuo-ku, Osaka 540-6207 (JP)
(74) Representative: Schwabe - Sandmair - Marx
(86) International application number: PCT/JP2010/007503
(87) International publication number: WO 2011/077747

(57) **Abstract**

Provided is a cleaning apparatus and method capable of cleaning by effectively utilizing surplus electric-power irregularly generated due to the utilization of natural energy.

A cleaning apparatus 10 includes: a water storage tank T1 configured to store cleaning liquid; a heating unit 11 configured to heat the cleaning liquid stored in the water storage tank T1; a signal reception unit 17 configured to receive a surplus power generation notification signal indicating that surplus power is generated; a control unit 16 configured to control the heating unit 11 to heat the cleaning liquid stored in the water storage tank T1 when the surplus power generation notification signal is received by the signal reception unit 17; a heat-insulating hot water storage tank T2 configured to introduce therein, at non-cleaning time, the cleaning liquid stored in the water storage tank T1 and heated by the heating unit, and to store the introduced cleaning liquid with heat insulation; and a cleaning nozzle 18 configured to introduce therein the cleaning liquid stored in the water storage tank T1 or the heat-insulating hot water storage tank T2, and to spray the introduced cleaning liquid.

## Description

### Technical Field

The present invention relates to a cleaning apparatus and a cleaning method. More particularly, the present invention relates to a cleaning apparatus, such as a dishwasher/dryer or an electric washing machine using hot water generated by an electric heater.

### Background Art

Conventionally, a commonly-used dishwasher/dryer stores water in a water tank provided in the cabinet thereof in advance, heats the water using an electric heater so as to generate hot water of about 80 degrees centigrade, and washes a dish using the hot water. However, relatively high electric-power is consumed by utilizing the electric heater.

Conventional techniques concerning the energy-saving of a hot-water supply apparatus is disclosed, e.g., in Patent Document 1. Patent Document 1 proposes to control an apparatus including two systems of heating means for generating hot water containing an electric heater and a heat pump such that the electric heater and the heat pump is used separately so as to reduce the power cost. More specifically, Patent Document 1 discloses operations as follows: to control the heating means so as to perform a boiling-up operation of a heat pump in a specified late-night time-period (e.g., 10 p.m. to 7 a.m. the next morning) in which electricity charges are low; to supply the stored hot water to a dishwasher without driving the electric heater during outside of the specified time period even if a stored amount of hot water generated by the heat pump is equal to or less than a predetermined amount; and to determine whether the electric heater is used in accordance with whether the temperature of the stored hot water is higher than a target temperature.

### Related Art Documents

### Patent Documents

Patent Document 1: JP-A-2006-170542

### Summary of the Invention

### Problem to be Solved by the Invention

In a home having a private power generation facility such as a photovoltaic power generation facility and a wind power generation facility utilizing natural energy, if electric-power consumption in the home is relatively low, sometimes, necessary electric-power can be obtained without using commercial power supplied from an external electric-power company. In addition, the power generation capability of the private power generation facility exceeds the power consumption of the power consumption in the home, surplus power is generated. The power generation capability of the private power generation facility largely varies with weather conditions, wind speeds, wind directions, etc. Thus, the power generation capability of the private power generation facility changes irregularly and momentarily, regardless of the time-periods. Accordingly, the amount of surplus power varies with such conditions.

Conventionally, because the power consumption in the late-night time-periods is low, electric-power is offered to consumers at low price. Thus, as disclosed in Patent Document 1, electric power cost can be reduced by effectively utilizing electric-power late at night. However, it is not considered to effectively utilize surplus power which is irregularly generated in homes by private power generation facilities utilizing natural energy. Surplus power is not generated at predetermined time-periods. Thus, if only the utilization of electric-power, e.g., in late-night time-periods is considered, insufficient result of energy-saving may be obtained. In this case, carbon dioxide emissions are not efficiently suppressed. Electricity charges resulting from power consumption and paid by consumers cannot be efficiently reduced.

The invention is made in view of the above circumstances, and an object thereof is to provide a cleaning apparatus and method capable of cleaning by effectively utilizing surplus electric-power irregularly generated due to the utilization of natural energy.

### Means for Solving the Problem

A cleaning apparatus according to the invention includes: a first storage unit configured to store cleaning liquid; a heating unit configured to heat the cleaning liquid stored in the first storage unit; a signal reception unit configured to receive a surplus power generation notification signal indicating that surplus power is generated; a heating control unit configured to control the heating unit to heat the cleaning liquid stored in the first storage unit when the surplus power generation notification signal is received by the signal reception unit; a second storage unit configured to introduce therein, at non-cleaning time, the cleaning liquid stored in the first storage unit and heated by the heating unit, and to store the introduced cleaning liquid with heat insulation; and a cleaning liquid spraying unit configured to introduce therein the cleaning liquid stored in the first storage unit or the second storage unit, and to spray the introduced cleaning liquid.

According to this cleaning apparatus, regardless of a time-period, when surplus power is generated, the heated cleaning liquid stored in the first storage unit can be stored in the second storage unit in a thermally insulated state. Accordingly, if the cleaning liquid heated is sufficiently stored in the second storage unit at cleaning, heating operation can be omitted by using the cleaning liquid for cleaning. Therefore, surplus power irregularly generated can effectively be utilized for heating the cleaning liquid, and carbon dioxide emissions can be suppressed.

The cleaning apparatus according to the invention includes: a first cleaning liquid supply unit; a second cleaning liquid supply unit; and a flow channel switching unit. The first cleaning liquid supply unit supplies the cleaning liquid stored in the first storage unit to the second storage unit or the cleaning liquid spraying unit. The second cleaning liquid supply unit supplies the cleaning liquid stored in the second storage unit to the cleaning liquid spraying unit. The flow channel switching unit switches between: a flow channel of the cleaning liquid which connects the first storage unit and the second storage unit; and a flow channel of the cleaning liquid which connects the first storage unit and the cleaning liquid spraying unit.

According to this cleaning apparatus, even if the cleaning apparatus includes two cleaning liquid supply unit and a single flow channel switching unit, heated cleaning liquid stored in the first storage unit can be stored in the second storage unit in a thermally insulated state. In addition, both of the cleaning liquid stored in the first storage unit and that stored in the second storage unit can be used during cleaning. Especially, unnecessary power consumption can be suppressed by using the cleaning liquid stored in the second storage unit.

The cleaning apparatus according to the invention includes: a first flow channel switching unit; a second flow channel switching unit; and a cleaning liquid supply unit. The first flow channel switching unit switches between: a flow channel of the cleaning liquid which connects the first storage unit and the cleaning liquid supply unit; and a flow channel of the cleaning liquid which connects the cleaning liquid supply unit and the cleaning liquid spray unit. The second flow channel switching unit switches between: a flow channel which connects the cleaning liquid supply unit and the second storage unit; and a flow channel which connects the second storage unit and the cleaning liquid spraying unit. The cleaning liquid supply unit supplies the cleaning liquid bi-directionally between the first flow channel switching unit and the second flow channel switching unit.

According to this cleaning apparatus, even if the cleaning apparatus includes: a single cleaning liquid supply unit configured to circulate cleaning liquid bi-directionally; and two flow channel switching units, the heated cleaning liquid stored in the first storage unit can be stored in the second storage unit in a thermally insulated state. In addition, both of the cleaning liquid stored in the first storage unit and that stored in the second storage unit can be used during cleaning. Especially, unnecessary power consumption can be suppressed by using the cleaning liquid stored in the second storage unit.

The cleaning apparatus according to the invention includes: a first flow channel switching unit; a second flow channel switching unit; and a cleaning liquid supply unit. The first flow channel switching unit switches between: a flow channel of the cleaning liquid which connects the first storage unit and the cleaning liquid supply unit; and a flow channel of the cleaning liquid which connects a bypass flow channel and the cleaning liquid supply unit, the bypass flow channel directly connecting the first flow channel switching unit to a flow channel between the second flow channel switching unit and the second storage unit. The second flow channel switching unit switches between: a flow channel of the cleaning liquid which connects the cleaning liquid supply unit and the second storage unit; and a flow channel of the cleaning liquid which connects the cleaning liquid supply unit and the cleaning liquid spraying unit. The cleaning liquid supply unit supplies the cleaning liquid to the second flow channel switching unit from the first flow channel switching unit.

According to this cleaning apparatus, even if the cleaning apparatus includes: a single cleaning liquid supply unit configured to circulate cleaning liquid only in a single direction; and two flow channel switching units, the heated cleaning liquid stored in the first storage unit can be stored in the second storage unit in a thermally insulated state. In addition, both of the cleaning liquid stored in the first storage unit and that stored in the second storage unit can be used in cleaning. Especially, unnecessary power consumption can be suppressed by using cleaning liquid stored in the second storage unit.

The cleaning apparatus according to the invention includes: a cleaning liquid supply control unit configured to control the cleaning liquid supply unit and the flow channel switching unit to supply the cleaning liquid stored in the second storage unit to the cleaning liquid spraying unit if a temperature of the cleaning liquid stored in the second storage unit is a predetermined temperature or more at cleaning.

According to this cleaning apparatus, cleaning is performed by introducing the cleaning liquid stored with heat insulation from the second storage unit. Thus, at cleaning, the heating of the cleaning liquid is unnecessary, and electric-power consumption can be suppressed.

The cleaning apparatus according to the invention includes: a cleaning liquid supply control unit configured to control the cleaning liquid supply unit and the flow channel switching unit such that if a temperature of cleaning liquid stored in the second storage unit is lower than a predetermined temperature at cleaning, cleaning liquid once sprayed into a cabinet of the cleaning apparatus from the second storage unit through the cleaning liquid spraying unit is stored in the first storage unit and reheated by the heating unit, and the reheated cleaning liquid is supplied to the cleaning liquid spraying unit.

According to this cleaning apparatus, even if the cleaning liquid stored in the second storage unit cools, the cleaning liquid reheated by the first storage unit is sprayed. Thus, even oil stains can be washed clean.

The cleaning apparatus according to the invention includes: a cleaning liquid supply control unit configured to control the cleaning liquid supply unit and the flow channel switching unit such that if a remaining amount of cleaning liquid stored in the second storage unit is less than a predetermined remaining amount at cleaning, the cleaning liquid stored in the first storage unit and heated by the heating unit is supplied to the cleaning liquid spraying unit.

According to this cleaning apparatus, even if the remaining amount of the cleaning liquid stored in the second storage unit becomes already small as a result of consuming the cleaning liquid by performing a cleaning operation, the heated cleaning liquid from the first storage unit is sprayed. Thus, oil stains can be washed clean.

The cleaning apparatus according to the invention includes: a cleaning liquid discharge control unit configured to perform control to discharge the cleaning liquid stored in the second storage unit if the signal reception unit receives the surplus power generation notification signal during non-cleaning.

According to this cleaning apparatus, if surplus power is generated during non-cleaning, the cleaning liquid stored in the second storage unit is discharged. Thus, the cleaning liquid of which temperature is lowered or remaining amount is reduced can be replaced with newly heated cleaning liquid. That is, when surplus power is generated, a good storage state of the second storage unit can be recovered for the next cleaning.

A cleaning method according to the invention is a cleaning method in a cleaning apparatus, which includes: a step of receiving a surplus power generation notification signal indicating that surplus power is generated; a heat control unit for heating cleaning liquid stored in a first storage unit configured to store the cleaning liquid when the surplus power generation notification signal is received; a step of introducing the cleaning liquid from the first storage unit into a second storage unit configured to store, with heat insulation, the heated cleaning liquid stored in the first storage unit; and a step of introducing the cleaning liquid stored in the first storage unit or the second storage unit and spraying the introduced cleaning liquid.

According to this cleaning method, regardless of a time-period, when surplus power is generated, the heated cleaning liquid stored in the first storage unit can be stored in the second storage unit in a thermally insulated state. Accordingly, if the cleaning liquid heated at cleaning is sufficiently stored in the second storage unit, the cleaning liquid is utilized for cleaning to thereby omit heating thereof. Accordingly, surplus power irregularly generated can effectively be utilized for heating the cleaning liquid. Carbon dioxide emissions can be suppressed.

### Advantages of the Invention

According to the invention, cleaning can be performed by effectively utilizing surplus electric-power irregularly generated due to the utilization of natural energy.

### Brief Description of the Drawings

FIG. 1 is a block diagram illustrating the configuration of a primary part of a cleaning apparatus according to a first embodiment of the invention.
FIG. 2 is a flowchart illustrating the contents of a hot water control-operation in the cleaning apparatus illustrated in FIG. 1.
FIG. 3 is a flowchart illustrating the contents of a cleaning control-operation in the cleaning apparatus illustrated in FIG. 1.
FIGS. 4(a) to 4(c) are block diagrams illustrating change of the state of the flow channel of cleaning liquid in the cleaning apparatus illustrated in FIG. 1.
FIGS. 5(a) to 5(c) are block diagrams illustrating change of the state of the flow channel of cleaning liquid in a modification of the cleaning apparatus illustrated in FIG. 1.
FIG. 6 is a block diagram illustrating the configuration of a primary part of a cleaning apparatus according to a second embodiment of the invention.

### Mode for Carrying Out the invention

A cleaning apparatus and a cleaning method according to an embodiment of the invention are described hereinafter with reference to the drawings.

### (First Embodiment)

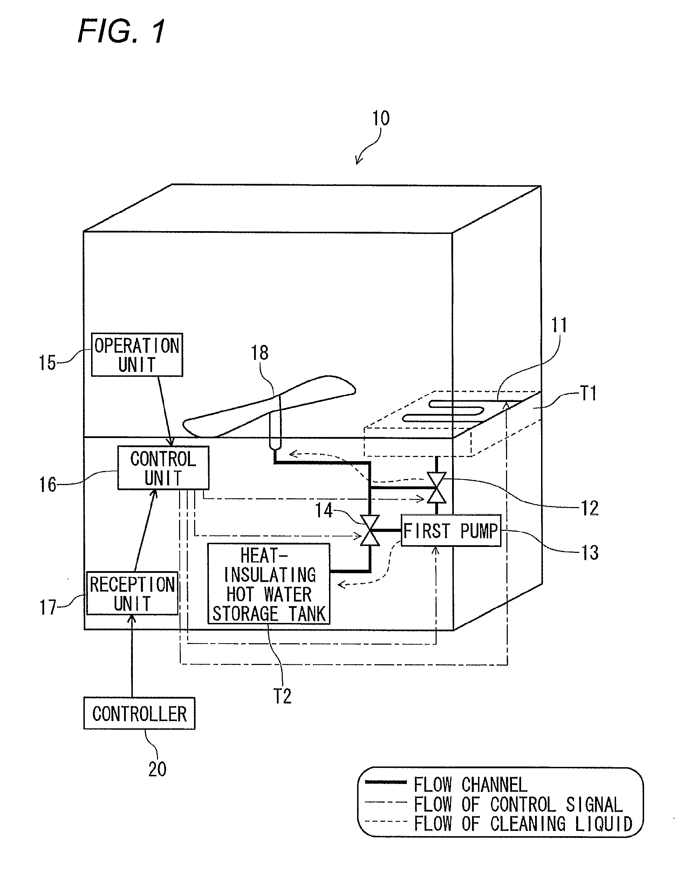

FIG. 1 illustrates an example of a principal configuration of a cleaning apparatus according to a first embodiment of the invention. The cleaning apparatus according to the invention is, e.g., a dishwasher/dryer 10. The dishwasher/dryer 10 uses water, hot water, or water/hot-water containing a detergent. In addition, the dishwasher/dryer 10 utilizes cleaning liquid heated to, e.g., 80 degrees centigrade in order to wash oil stains or the like clean from dishes. In addition, the dishwasher/dryer 10 uses, e.g., water as the cleaning liquid when performing rinsing to wash out the detergent.

As illustrated in FIG. 1, the dishwasher/dryer 10 includes a water storage tank (an example of a first storage unit) T1, a heat-insulating hot water storage tank (an example of a second storage unit) T2, a heating unit 11, a first switching valve (an example of a first flow channel switching unit) 12, a pump (an example of a cleaning liquid supply unit) 13, a second switching valve (an example of a second flow channel switching unit) 14, an operation unit 15, a control unit (an example of each of a heating control unit, a cleaning liquid supply control unit, and a cleaning liquid discharge control unit) 16, a reception unit (an example of a signal reception unit) 17, and a cleaning nozzle (an example of a cleaning liquid spraying unit) 18.

The water storage tank T1 is a tank having predetermined capacity and stores water supplied from a water supply source such as a home, or hot-water/water containing a detergent as cleaning liquid. Incidentally, after the cleaning liquid is sprayed from the cleaning nozzle 18 in order to perform dishwashing or the like, the cleaning liquid can be used again by being filtered and collected into the water storage tank T1.

The heat-insulating hot water storage tank T2 is a tank that has predetermined capacity and a heat-insulating function. The heat-insulating hot water storage tank T2 can store the heated cleaning liquid in a thermally insulated state. The cleaning liquid stored in the heat-insulating hot water storage tank T2 can be obtained by introducing thereto the cleaning liquid that is stored in the water storage tank T1 and heated.

The heating unit 11 is an electric heater energized in response to a control signal output from the control unit 16 so as to produce heat. The heating unit 11 is arranged in proximity to the water storage tank T1 and can heat the cleaning liquid stored in the water storage tank T1.

The first switching valve 12 is a valve (e.g., a magnetic valve) controllable in response to a control signal output from the control unit 16 to switch a flow channel in which a cleaning liquid is circulated. The first switching valve 12 can selectively switch between a flow channel connecting the water storage tank T1 and the pump 13 to each other and that connecting the pump 13 and the cleaning nozzle 18 to each other.

The pump 13 is controllable, e.g., electrically, and applies, in response to a control signal output from the control unit 16, pressure to cleaning liquid in the flow channel to thereby circulate the cleaning liquid in a predetermined direction. The pump 13 has a function of causing the cleaning liquid to flow bidirectionally.

The second switching valve 14 is a valve (e.g., a magnetic valve) controllable in response to a control signal output from the control unit 16 to switch a flow channel in which cleaning liquid is circulated. The second switching valve 14 can selectively switch between a flow channel connecting the pump 13 and the heat-insulating hot water storage tank T2 to each other and that connecting the pump 13 and the cleaning nozzle 18 to each other.

The cleaning nozzle 18 into which cleaning liquid supplied thereto in a pressurized state is introduced sprays the cleaning liquid to thereby clean various dishes arranged in the cabinet of the dishwasher/dryer 10.

The operation unit 15 has various buttons and the like for receiving operations input by a user of the dishwasher/dryer 10. The control unit 16 is a control element such as a microcomputer and performs various types of control (to be described below) in order to implement the functions of the dishwasher/dryer 10.

The reception unit 17 receives, from the power-saving controller 20 installed outside the dishwasher/dryer 10, a surplus power generation notification signal for notifying that surplus electric-power is generated.

The power-saving controller 20 generates a surplus power generation notification signal on predetermined conditions, and outputs the generated signal. More specifically, in a case where a home has a private power generation facility, such as a photovoltaic power facility or a wind power facility, for converting natural energy into electric-power, the power-saving controller 20 compares, in real time, the amount of electric-power generated by the private power generation facility with that of electric-power consumed by the entire types of electric equipment in the home. Then, the power-saving controller 20 outputs results of comparison sequentially. That is, if the result meets the following condition: a total amount of generated electric-power > a total amount of the entire electric-power consumption, surplus electric-power is generated. Thus, the power-saving controller 20 generates a surplus power generation notification signal. If the result does not meet the condition, the power-saving controller 20 generates no surplus power generation notification signal. If a total amount of generated electric-power < a total amount of the entire electric-power consumption, a shortfall of electric-power is compensated for by utilizing commercial electric-power supplied from an electric-power company.

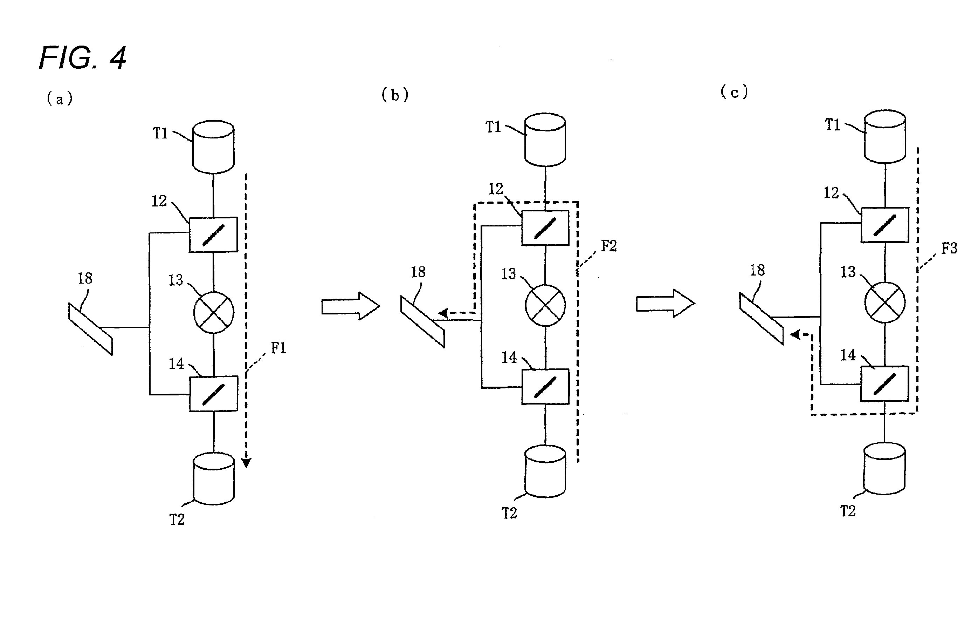

FIG. 4 illustrates how the state of the flow channel of the cleaning liquid changes in the dishwasher/dryer 10 illustrated in FIG. 1. When the cleaning liquid derived from the water storage tank T1 is heated and then stored in the heat-insulating hot water storage tank T2, a flow channel F1 illustrated in FIG. 4(a) is formed. When dishwashing is performed using the cleaning liquid derived from the heat-insulating hot water storage tank T2 in which the cleaning liquid has been stored with heat insulation, a flow channel F2 illustrated in FIG. 4(b) is formed. In addition, when dishwashing is performed using the cleaning liquid derived from the water storage tank T1, a flow path F3 illustrated in FIG. 4(c). FIG. 4 assumes that the pump 13 supplies the cleaning liquid by bidirectionally circulating the cleaning liquid between the first switching valve 12 and the second switching valve 14.

First, a state illustrated in FIG. 4(a) is described. In this case, the control unit 16 performs switching control on the first switching valve 12 to form a flow path that connects the water storage tank T1 to one end side of the pump 13. In addition, the control unit 16 performs switching control on the switching valve 14 to form a flow path that connects the other end side of the pump 13 to the heat-insulating hot water storage tank T2. Further, the control unit 16 controls the pump 13 to supply cleaning liquid in a direction from the second switching valve 14 to the first switching valve 12. Consequently, the flow channel F2 indicated by a dashed arrow in FIG. 4(a) is formed. The cleaning liquid flows out of the heat-insulating hot water storage tank T2 and is led to the cleaning nozzle 18 through the second switching valve 14, the pump 13, and the first switching valve 12.

Next, state illustrated in FIG. 4(b) is described. In this case, the control unit 16 performs switching control on the first switching valve 12 to form a low path that connects the cleaning nozzle 18 to one end side of the pump 13. In addition, the control unit 16 performs switching control on the second switching valve 14 to form a flow path that connects the other end side of the pump 13 to the heat-insulating hot water storage tank T2. Further, the control unit 16 controls the pump 13 to supply the cleaning liquid in a direction from the first switching valve 12 to the second switching valve 14. Consequently, the flow path F2 indicated by a dashed arrow in FIG. 4(b) is formed. The cleaning liquid flows out of the water storage tank T2 to the cleaning nozzle 18 through the second switching valve 14, the pump 13, and the first switching valve 12.

Next, state illustrated in FIG. 4(c) is described. In this case, the control unit 16 performs switching control on the first switching valve 12 to form a low path that connects the water storage tank T1 to one end side of the pump 13. In addition, the control unit 16 performs switching control on the second switching valve 14 to form a flow path that connects the other end side of the pump 13 to the cleaning nozzle 18. Further, the control unit 16 controls the pump 13 to supply the cleaning liquid in a direction from the first switching valve 12 to the second switching valve 14. Consequently, the flow path F3 indicated by a dashed arrow in FIG. 4(c) is formed. The cleaning liquid flows out of the water storage tank T1 to the cleaning nozzle 18 through the first switching valve 12, the pump 13, and the second switching valve 14.

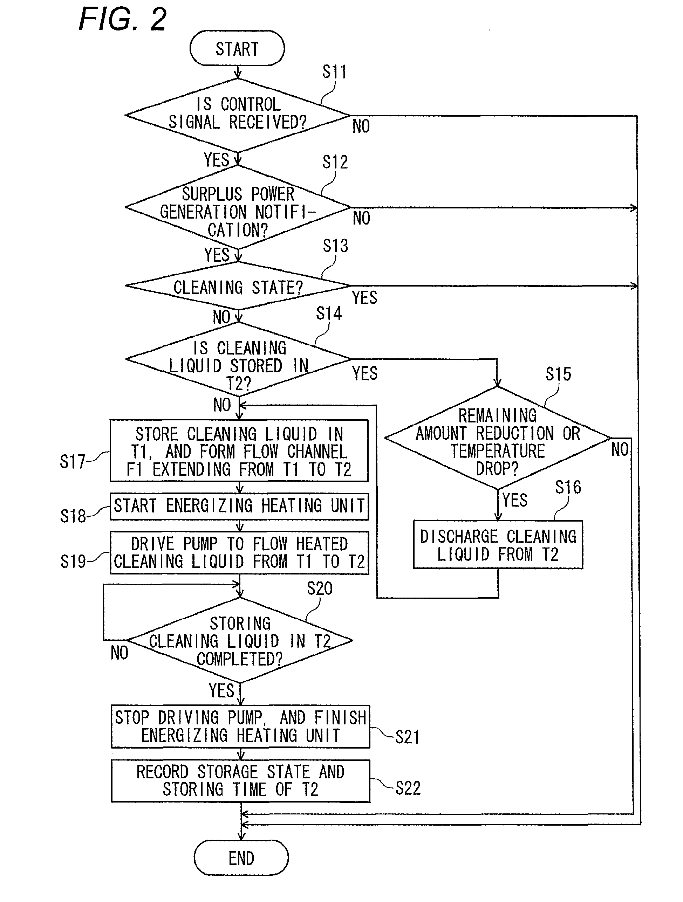

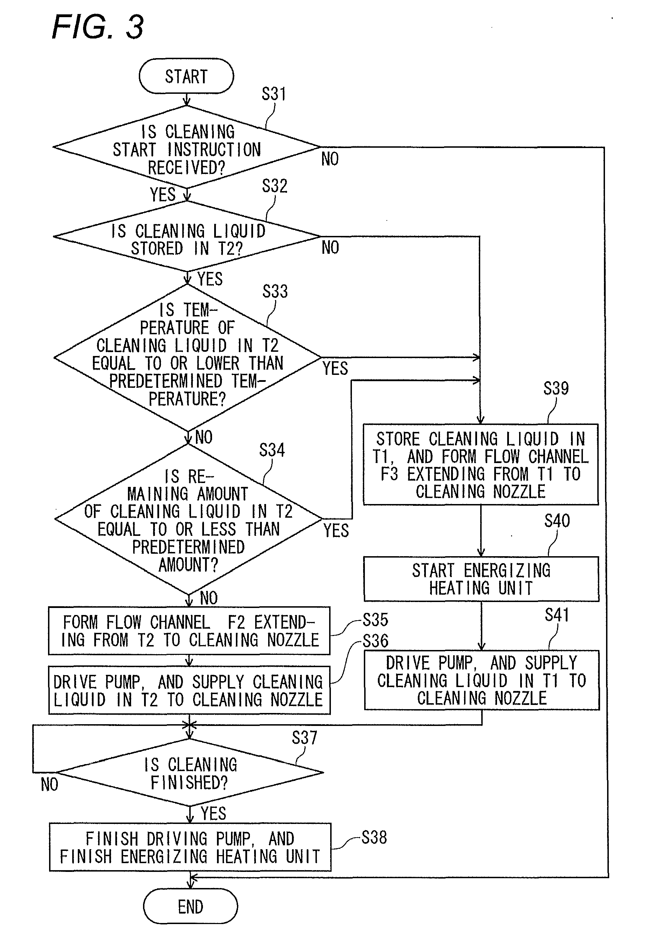

Next, a primary operation of the dishwasher/dryer 10, which is implemented under the control of the control unit 16, is described. FIG. 2 illustrates the contents of an operation (i.e., a hot water storage control operation) for storing, in the heat-insulating hot water storage tank T2, cleaning liquid stored in the water storage tank T1. FIG. 3 illustrates the contents of an operation (i.e., a cleaning control operation) for dishwashing in the cabinet of the dishwasher/dryer 10 using the heated cleaning liquid.

First, the contents of the hot water storage control-operation illustrated in FIG. 2 are described.
In step S11, the control unit 16 discerns whether the reception unit 17 receives a control signal from the power-saving controller 20. If the reception of a control signal is detected, the control unit 16 proceeds to step S12.

In step S12, the control unit 16 discerns whether the control signal received by the reception unit 17 in step S11 is a surplus power generation notification signal. If the received control signal is a surplus power generation notification signal, the control unit 16 proceeds to the next step S13.

In step S13, the control unit 16 discerns whether the dishwasher/dryer 10 is in a cleaning state. If the dishwasher/dryer 10 is not in a cleaning state, the control unit 16 proceeds to the next step S14.

In step S14, the control unit 16 discerns whether the heat-insulating hot water storage tank T2 is in a liquid-stored state in which the cleaning liquid from the water storage tank T1 is stored. If the heat-insulating hot water storage tank T2 is in the liquid-stored state, the control unit 16 proceeds to step S15. If the heat-insulating hot water storage tank T2 is not in the liquid-stored state, the control unit 16 proceeds to step S17. The heat-insulating hot water storage tank T2 is brought into the liquid-stored state, e.g., in the case of performing a sequence of operations for heating, after the initialization of the dishwasher/dryer 10 by, e.g., power-on, the cleaning liquid in the water storage tank T1, introducing the heated cleaning liquid thereinto and storing a predetermined amount of the cleaning liquid therein. The sequence of operations are performed at a rate of, e.g., once a day.

In step S15, the control unit 16 discerns whether the cleaning liquid stored in the heating-insulating hot water storage tank T2 is in a remaining-amount reducing state in which the remaining amount thereof is reduced, or a temperature drop state in which the temperature thereof is lowered. If the cleaning liquid stored in the heating-insulating hot water storage tank T2 is in the remaining-amount reducing state or the temperature drop state, the control unit 16 proceeds to step S16. Incidentally, the discernment of one of the remaining-amount reducing state and the temperature drop state can be omitted. Alternatively, the control unit 16 can omit step S15 itself and perform processing in the subsequent step S16.

Incidentally, the above remaining amount reduction can be discerned by providing a special sensor in the apparatus and comparing the remaining amount of the cleaning liquid in the heat-insulating hot water storage tank, which is detected by the sensor, with a threshold. Alternatively, the remaining amount reduction can be discerned by comparing, with a threshold, the amount of cleaning liquid consumed since the heat-insulating hot water storage tank T2 is brought into the liquid-stored state. The consumed amount of the cleaning liquid can be managed according to the time length of the cleaning operation in the case of assuming that the flow rate of the cleaning liquid is constant. Further, the temperature drop can be detected by providing a temperature sensor which detects the temperature of the inside of the heat-insulating hot water storage tank T2, and using the temperature sensor. Alternatively, the temperature drop can be estimated, based on the length of time elapsing since the heat-insulating hot water storage tank T2 is put into the liquid-stored state.

In step S16, the control unit 16 opens the flow channel of a discharge valve (not shown) provided on a discharge path of the heat-insulating hot water storage tank T2 and controls the discharge valve to discharge the cleaning liquid from the inside of the heat insulating hot water storage tank T2. The cleaning liquid discharged from the heat-insulating hot water storage tank T2 can be either collected into the water storage tank T1 or discarded.

In step S17, the control unit 16 stores the cleaning liquid in the water storage tank T1 and controls the first switching valve 12 and the second switching valve 14 to form the flow channel F1 of the cleaning liquid, which extends from the water storage tank T1 to the heat-insulating hot water storage tank T2, as illustrated in FIG. 4(a). Next, in step S18, the heating unit 11 starts energizing the heating unit 11 to heat the cleaning liquid stored in the water storage tank T1. Then, in step S19, the control unit 16 drives and controls the pump 13 to flow the cleaning liquid from the water storage tank T1 to the heat-insulating hot water storage tank T2.

When performing processing in steps S17 to S19, the heated cleaning liquid is derived from the water storage tank T1 by the pressure generated by the pump 13. Thus, the cleaning liquid reaches the inside of the heat-insulating hot water storage tank T2 through the first switching valve 12, the pump 13, and the second switching valve 14.

In step S20, the control unit 16 discerns whether an operation for storing a predetermined amount of the cleaning liquid in the heating-insulating hot water storage tank T2 is completed. The control unit 16 can discern, e.g., whether a predetermined time elapses since processing in steps S17 to S19 is performed. Alternatively, a sensor for detecting an amount of the cleaning liquid stored by the heat-insulating hot water storage tank T2 can be provided. Upon completion of this operation, the control unit 16 proceeds to step S21.

In step S21, the control unit 16 stops driving the pump 13 and energizing the heating unit 11. Thus, the control unit 16 finishes the operation for storing the cleaning liquid in the heat-insulating hot water storage tank T2.

In step S22, the control unit 16 causes a predetermined memory (not shown) to record information concerning a storage state, such as the amount of the cleaning liquid stored in the heat-insulating hot water storage tank T2, and information concerning time at which the completion of storing the cleaning liquid in the heat-insulating hot water storage tank T2 is detected in step S20 in order to obtain the states of the dishwasher/dryer 10. Information stored in this step is utilized when the hot water storage control-operation is performed again. Incidentally, processing in step S22 can be omitted.

Next, the contents of a cleaning control-operation illustrated in FIG. 3 are described.
In step S31, the control unit 16 monitors the state of the operation unit 15 and discerns whether there is a predetermined input operation (i.e., a cleaning start instruction) from a user. If an input representing a cleaning start instruction is detected, the control unit 16 proceeds to the next step S32. Alternatively, a setting unit (not shown) can be preliminarily set using a timer or the like so as to provide a cleaning start instruction at a predetermined time, instead of an instruction from the operation unit 15.

In step S32 similar to step S14 illustrated in FIG. 2, the control unit 16 discerns whether heated cleaning liquid is stored in the heating-insulating hot water storage tank T2. If the heated cleaning liquid is stored therein, the control unit 16 proceeds to step S33. If the heated cleaning liquid is not stored therein, the control unit 16 proceeds to step S39.

In step S33, the control unit 16 discerns whether the temperature of the cleaning liquid in the heat-insulating hot water storage tank T2 is equal to or lower than a predetermined temperature. In this case, if a time elapsing since the heat-insulating hot water storage tank T2 is put into a liquid-stored state is equal to or longer than a predetermined value, the temperature of the cleaning liquid can be regarded as being equal to or less than a predetermined value. Alternatively, the control unit 16 can discern by comparing, with a predetermined threshold, the temperature actually detected by the temperature sensor. If the temperature of the cleaning liquid is equal to or lower than the predetermined temperature, the control unit 16 proceeds to step S39, otherwise, the control unit 16 proceeds to step S34. Incidentally, the control unit 16 can perform processing in the subsequent step S34 by omitting step S33.

In step S34, the control unit 16 discerns whether the remaining amount of the cleaning liquid in the heat-insulating hot water storage tank T2 is equal to or less than a predetermined remaining amount. In this case, if the length of a time in which a cleaning operation is performed using the cleaning liquid in the tank T2 since the tank T2 is put into a liquid-stored state is equal to or longer than a predetermined value, the remaining amount of the cleaning liquid can be regarded as being equal to or less than a predetermined remaining amount. Alternatively, the actually remaining amount of the cleaning liquid in the heat-insulating hot water storage tank T2 can be detected by a sensor (not shown). If the remaining amount of the cleaning liquid is equal to or less than the predetermined remaining amount, the control unit 16 proceeds to step S39. Otherwise, the control unit 16 proceeds to step S35. Incidentally, the subsequent step S35 can be performed by omitting step S34.

In step S35, the control unit 16 controls the first switching valve 12 and the second switching valve 14 to form the flow channel F2 extending from the heat-insulating hot water storage tank T2 to the cleaning nozzle 18, as illustrated in FIG. 4(b).

In step S36, the control unit 16 provides a drive start instruction to cause the pump 13 to supply the cleaning liquid in a direction from the heat-insulating hot water storage tank T2 to the cleaning nozzle 18. Consequently, the cleaning liquid in the heat-insulating hot water storage tank T2 is derived by the pressure of the pump 13. The cleaning liquid is introduced to the cleaning nozzle 18 via the flow channel F2 passing through the second switching valve 14, the pump 13, and the first switching valve 12. Then, the cleaning liquid is sprayed from the cleaning nozzle 18.

In step S37, the control unit 16 discerns whether a cleaning operation is finished. For example, the control unit 16 detects whether a predetermined elapses since a cleaning start instruction is provided in step S31. Upon completion of cleaning, the control unit 16 proceeds to step S38.

In step S38, the control unit 16 finishes driving the pump 13. In addition, if the heating unit 11 is being energized, the control unit 16 finishes energizing the heating unit 11.

In step S39, the control unit 16 causes the water storage tank T1 to store the cleaning liquid, and controls the first switching valve 12 and the second switching valve 14 to form the flow channel F3 extending from the water storage tank T1 to the cleaning nozzle 18, as illustrated in FIG. 4(c). Incidentally, the cleaning liquid to be stored in the water storage tank T1 can be either that supplied from a water supply source such as a household water supply, or that obtained by collecting the cleaning liquid once sprayed into the dishwasher/dryer 10 through the cleaning nozzle 18 from the heat-insulating hot water storage tank T2.

In step S40, the control unit 16 starts energizing the heating unit 11 and causes the heating unit 11 to perform heating (including reheating) of the cleaning liquid stored in the water storage tank T1.

In step S41, the control unit 16 provides a drive start instruction causing the pump 13 to supply the cleaning liquid in a direction from the first switching valve 12 to the second switching valve 14. Consequently, the cleaning liquid in the water storage tank T1 is derived by the pressure of the pump 13. The derived cleaning liquid reaches the cleaning nozzle 18 via the flow channel F3 sequentially passing through the first switching valve 12, the pump 13, and the second switching valve 14. Then, the cleaning liquid is sprayed from the cleaning nozzle 18.

Thus, when surplus power is generated, the dishwasher/dryer 10 stores with heat insulation, in the heat-insulating hot water storage tank T2, the cleaning liquid heated by utilizing the heating unit 11. Thus, cleaning liquid needed for cleaning can be generated by effectively utilizing surplus power. Accordingly, the dishwasher/dryer 10 is useful in reducing an amount of carbon dioxide emissions. In addition, even in a case where the heat-insulating hot water storage tank T2 is in a liquid-stored state, if surplus power is generated when the dishwasher/dryer 10 is in a non-cleaning state, the heated cleaning liquid is stored in the heat-insulating hot water storage tank T2 again after the cleaning liquid in the heat-insulating hot water storage tank T2 is derived therefrom. Thus, the liquid-stored state of the inside of the heat-insulating hot water storage tank T2 can be put back into a state suitable for cleaning.

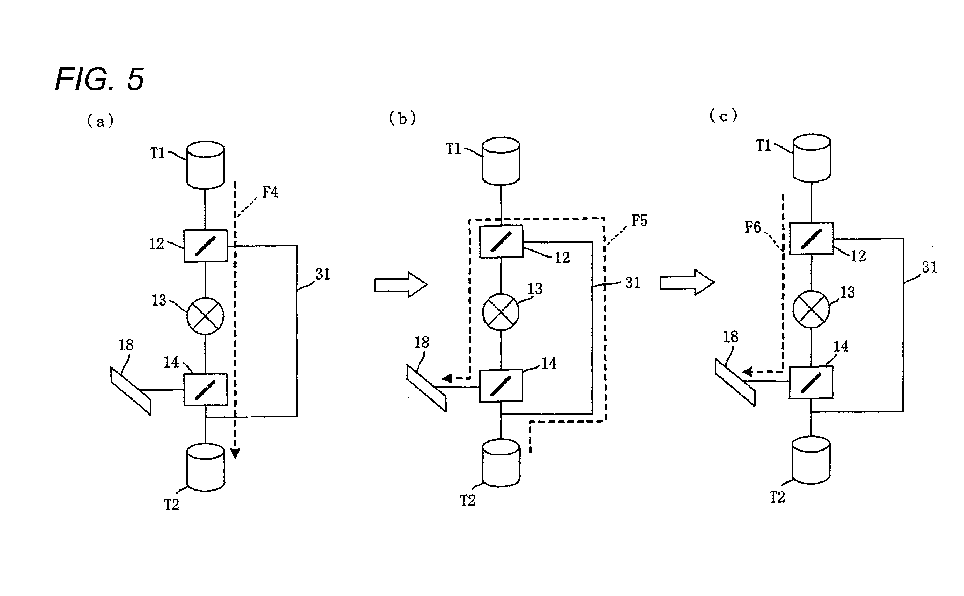

Next, a modification of the dishwasher/dryer 10 is described.
Regarding the above dishwasher/dryer 10, it is assumed that the pump 13 can circulate the cleaning liquid bidirectionally. However, in the case of some types of the pump, the direction of circulation of the cleaning liquid is limited only to a single direction. In the case where the direction of circulation of the cleaning liquid by the pump 13 is limited only to a single direction, it is advisable to configure the flow channel of the cleaning liquid of the dishwasher/dryer 10 as a modification illustrated in FIG. 5. The modification of the dishwasher/dryer 10 includes a bypass channel 31 that connects the first switching valve 12 to a flow channel between the second switching valve 14 and the heat-insulating hot water storage tank T2.

In the configuration of the modification illustrated in FIG. 5, a flow channel F4 illustrated in FIG. 5(a) is formed when the cleaning liquid stored in the water storage tank T1 is heated and introduced into the heat-insulating hot water storage tank T2. Alternatively, when dishwashing is performed using a hot cleaning liquid derived from the heat-insulating hot water storage tank T2, a flow channel F5 illustrated in FIG. 5(b) is formed. In addition, when dishwashing is performed using cleaning liquid derived from the water storage tank T1, a flow channel F6 illustrated in FIG. 5(c) is formed. In FIG. 5, it is assumed that the pump 13 circulates and supplies the cleaning liquid only in a single direction from the first switching valve 12 to the second switching valve 14.

First, a state illustrated in FIG. 5(a) is described. In this case, the control unit 16 performs switching control on the first switching valve 12 to form a flow channel which connects the water storage tank T1 to a one-end side of the pump 13. In addition, the control unit 16 performs switching control on the second switching valve 14 to form a flow channel which connects the other end side of the pump 13 to the heat-insulating hot water storage tank T2. In addition, the control unit 16 controls the pump 13 to be driven. In this state, the direction of circulation of the cleaning liquid driven by the pump 13 is limited only to a direction directed to the second switching valve 14 from the first switching valve 12. Consequently, the flow channel F4 indicated by a dashed arrow in FIG. 5(a) is formed. The cleaning liquid flows out of the water storage tank T1 and is introduced to the inside of the heat-insulating hot water storage tank T2 via the first switching valve 12, the pump 13, and the second switching valve 14.

Next, a state illustrated in FIG. 5(b) is described. In this case, the control unit 16 performs switching control on the first switching valve 12 to form a flow channel which connects the water storage tank T2 to a one-end side of the pump 13 via a bypass channel 31. In addition, the control unit 16 performs switching control on the second switching valve 14 to form a flow channel which connects the other end side of the pump 13 to the cleaning nozzle 18. In addition, the control unit 16 controls the pump 13 to be driven. Incidentally, the pump 13 is driven to suck the cleaning liquid in a direction from the bypass channel 31 to the second switching valve 14 through the first switching valve 12, so that the cleaning liquid stored in the heat-insulating hot water storage tank T2 is automatically introduced to the bypass channel 31. Consequently, the flow channel F5 indicated by a dashed arrow in FIG. 5(b) is formed. The cleaning liquid flows out of the heat-insulating hot water storage tank T2 and is introduced into the cleaning nozzle 18 through the bypass channel 31 via the first switching valve 12, the pump 13, and the second switching valve 14.

Next, a state illustrated in FIG. 5(c) is described. In this case, the control unit 16 performs switching control on the first switching valve 12 to form a flow channel which connects the water storage tank T1 to a one-end side of the pump 13. In addition, the control unit 16 performs switching control on the second switching valve 14 to form a flow channel which connects the other end side of the pump 13 to the cleaning nozzle 18. In addition, the control unit 16 controls the pump 13 to be driven. Consequently, the flow channel F6 indicated by a dashed arrow in FIG. 5(c) is formed. The cleaning liquid flows out of the water storage tank T1 and is introduced into the cleaning nozzle 18 via the first switching valve 12, the pump 13, and the second switching valve 14.

According to the dishwasher/dryer 10 having a configuration illustrated in FIG. 5, even in a case where the dishwasher/dryer 10 includes a single pump configured to circulate the cleaning liquid only in a single direction, and two switching valves, the cleaning liquid stored in the water storage tank T1 can be heated by surplus power, then introduced into the heat-insulating hot water storage tank T2, and thus stored therein in a thermally insulated state. Both of the cleaning liquid stored in the water storage tank T1 and that stored in the heat-insulating hot water storage tank T2 can be used during cleaning. Unnecessary power consumption can be suppressed using, especially, the cleaning liquid stored in the heat-insulating hot water storage tank T2.

### (Second Embodiment)

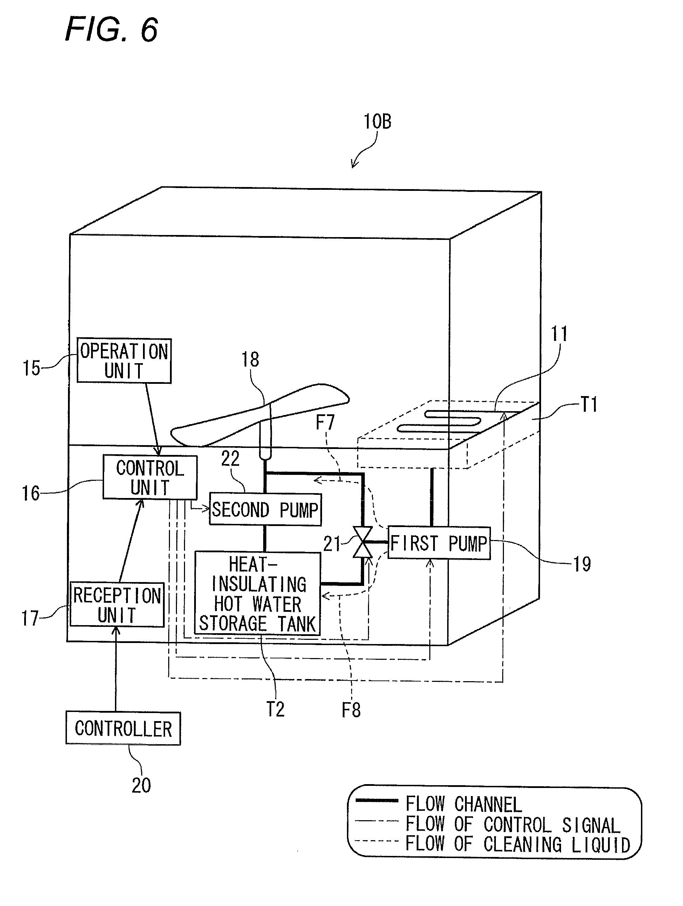

FIG. 6 illustrates a dishwasher/dryer 10B according to a second embodiment of the invention. In comparison with the dishwasher/dryer 10 illustrated in FIG. 1, the dishwasher/dryer 10B illustrated in FIG. 6 includes two pumps (a first pump (i.e., an example of the first cleaning liquid supply unit) 19, and a second pump (i.e., an example of the second cleaning liquid supply unit) 22), instead of the single pump 13. In addition, the dishwasher/dryer 10B illustrated in FIG. 6 includes a single switching valve (i.e., an example of the flow channel switching unit) 21, instead of the two switching valves (i.e., the first switching valve 12 and the second switching valve 14). Each component of the dishwasher/dryer 10B illustrated in FIG. 6, which is the same as the component of the dishwasher/dryer 10 illustrated in FIG. 1, is designated with the same reference numeral as that used to designate the latter component of the dishwasher/dryer 10. The description of such components of the dishwasher/dryer 10B is omitted. Incidentally, the dishwasher/dryer 10B differs from that 10 in the configurations of the pumps and the switching valves. Thus, the flow channel of the cleaning liquid in the dishwasher/dryer 10B is slightly changed from that of the cleaning liquid in the dishwasher/dryer 10 as shown in Fig. 6.

In the dishwasher/dryer 10B, the first pump 19 derives the cleaning liquid stored in the water storage tank T1 by pressure in response to a control signal from the control unit 16, and supplies the cleaning liquid to the heat-insulating hot water storage tank T2 or the cleaning nozzle 18. The second pump 22 derives the cleaning liquid stored in the heat-insulating hot water storage tank T2 by pressure in response to a control signal from the control unit 16, and supplies to the cleaning liquid to the cleaning nozzle 18. In addition, the switching valve 21 switches a flow channel serving as a destination of the cleaning liquid derived from the water storage tank T1 by the first pump 19 in response to a control signal from the control unit 16. More specifically, the switching valve 21 selectively switches between a flow channel connecting the water storage tank T1 to the heat-insulating hot water storage tank T2 and another flow channel connecting the water storage tank T1 to the cleaning nozzle 18.

Next, the contents of primary operations of the dishwasher/dryer 10B are described.
First, the hot water storage control-operation of the dishwasher/dryer 10B is similar to that illustrated in FIG. 2 and differs therefrom in processing in steps S17 and S19. In the dishwasher/dryer 10B, the control unit 16 performs switching control on the switching valve 21 to form a flow channel F7 connecting the water storage tank T1 to the heat-insulating hot water storage tank T2, instead of the processing in steps S17 and S19. Then, the control unit 16 controls the pump 13 to supply the cleaning liquid in a direction from the water storage tank T1 to the heat-insulating hot water storage tank T2 by pressure.

The cleaning control-operation of the dishwasher/dryer 10B is similar to that illustrated in FIG. 3 and differs from that illustrated in FIG. 3 in processing in steps S35, S36, S39, and S41. In the case of performing dishwashing in the cabinet of the dishwasher/dryer 10B using the cleaning liquid stored in the heat-insulating hot water storage tank T2, the control unit 16 drives the second pump 22, derives the cleaning liquid from the heat-insulating hot water storage tank T2 by pressure, and introduces the cleaning liquid into the cleaning nozzle 18. In addition, in the case of deriving the cleaning liquid stored in the water storage tank T1 and utilizing the derived cleaning liquid for cleaning, the control unit 16 performs switching control on the switching valve 21 to form a flow channel F8 connecting the water storage tank T1 to the cleaning nozzle 18. In addition, the control unit 16 controls the first pump 19 to supply the cleaning liquid in a direction from the water storage tank T1 to the cleaning nozzle 18 by pressure.

According to such a dishwasher/dryer 10B, even if the dishwasher/dryer has two pumps and a single switching valve, it is possible to heat the cleaning liquid stored in the water storage tank T1 by surplus power, to introduce the heated cleaning liquid into the heat-insulating hot water tank T2, and to store the introduced cleaning liquid therein in a thermally insulated state. In addition, both of the cleaning liquid stored in the water storage tank T1 and that stored in the heat-insulating hot water storage tank T2 can be used during cleaning. Unnecessary power consumption can be suppressed by using, especially, the cleaning liquid stored in the heat-insulating hot water storage tank T2.

In the present embodiment, the dishwasher/dryer 10B has mainly been described as the cleaning apparatus. However, other apparatuses can be employed as the cleaning apparatus. For example, even in the case of assuming a washing machine as the cleaning apparatus, the washing machine can be implemented by employing the configuration and function similar to those of the dishwasher/dryer 10 or 10B. Although such a washing machine needs heated cleaning liquid, the temperature of the cleaning liquid ranges from about 30 degrees centigrade to 40 degrees centigrade. Consequently, a detergent is put into a state in which the detergent is sufficiently dissolved into hot water. Consequently, stains of a wash can appropriately be cleaned.

Although the present invention is described in detail with reference specific embodiments, it is apparent to the skilled person that various changes or modification may be made without departing from the spirit and scope of the present invention.

### Industrial Applicability

As described above, the present invention is useful for a cleaning apparatus such as a dishwasher/dryer, an electric washing machine, a warm washer toilet seat, etc., which can clean by effectively utilizing surplus electric-power irregularly generated due to the utilization of natural energy.

### Description of Reference Signs

- 10, 10B: Dishwasher/dryer
- 11: Heating Unit
- 12: First Switching Valve
- 13: Pump
- 14: Second Switching Valve
- 15: Operation Unit
- 16: Control Unit
- 17: Reception Unit
- 18: Cleaning Nozzle
- 19: First Pump
- 20: Power-saving Controller
- 21: Switching Valve
- 22: Second Pump
- 31: Bypass Channel
- T1: Water Storage Tank
- T2: Heat-insulating Hot Water Storage Tank

## Claims

1. A cleaning apparatus comprising:
a first storage unit configured to store cleaning liquid;
a heating unit configured to heat the cleaning liquid stored in the first storage unit;
a signal reception unit configured to receive a surplus power generation notification signal indicating that surplus power is generated;
a heating control unit configured to control the heating unit to heat the cleaning liquid stored in the first storage unit when the surplus power generation notification signal is received by the signal reception unit;
a second storage unit configured to introduce therein, at non-cleaning time, the cleaning liquid stored in the first storage unit and heated by the heating unit, and to store the introduced cleaning liquid with heat insulation; and
a cleaning liquid spraying unit configured to introduce therein the cleaning liquid stored in the first storage unit or the second storage unit, and to spray the introduced cleaning liquid.

2. The cleaning apparatus according to claim 1, further comprising:
a first cleaning liquid supply unit;
a second cleaning liquid supply unit; and
a flow channel switching unit,
wherein the first cleaning liquid supply unit supplies the cleaning liquid stored in the first storage unit to the second storage unit or the cleaning liquid spraying unit,
wherein the second cleaning liquid supply unit supplies the cleaning liquid stored in the second storage unit to the cleaning liquid spraying unit, and
wherein the flow channel switching unit switches between: a flow channel of the cleaning liquid which connects the first storage unit and the second storage unit; and a flow channel of the cleaning liquid which connects the first storage unit and the cleaning liquid spraying unit.

3. The cleaning apparatus according to claim 1, further comprising:
a first flow channel switching unit;
a second flow channel switching unit; and
a cleaning liquid supply unit,
wherein the first flow channel switching unit switches between: a flow channel of the cleaning liquid which connects the first storage unit and the cleaning liquid supply unit; and a flow channel of the cleaning liquid which connects the cleaning liquid supply unit and the cleaning liquid spray unit,
wherein the second flow channel switching unit switches between: a flow channel which connects the cleaning liquid supply unit and the second storage unit; and a flow channel which connects the second storage unit and the cleaning liquid spraying unit, and
wherein the cleaning liquid supply unit supplies the cleaning liquid bi-directionally between the first flow channel switching unit and the second flow channel switching unit.

4. The cleaning apparatus according to claim 1, further comprising:
a first flow channel switching unit;
a second flow channel switching unit; and
a cleaning liquid supply unit,
wherein the first flow channel switching unit switches between: a flow channel of the cleaning liquid which connects the first storage unit and the cleaning liquid supply unit; and a flow channel of the cleaning liquid which connects a bypass flow channel and the cleaning liquid supply unit, the bypass flow channel directly connecting the first flow channel switching unit to a flow channel between the second flow channel switching unit and the second storage unit,
wherein the second flow channel switching unit switches between: a flow channel of the cleaning liquid which connects the cleaning liquid supply unit and the second storage unit; and a flow channel of the cleaning liquid which connects the cleaning liquid supply unit and the cleaning liquid spraying unit, and
wherein the cleaning liquid supply unit supplies the cleaning liquid to the second flow channel switching unit from the first flow channel switching unit.

5. The cleaning apparatus according to any one of claims 1 to 4, further comprising:
a cleaning liquid supply control unit configured to control the cleaning liquid supply unit and the flow channel switching unit to supply the cleaning liquid stored in the second storage unit to the cleaning liquid spraying unit if a temperature of the cleaning liquid stored in the second storage unit is a predetermined temperature or more at cleaning.

6. The cleaning apparatus according to any one of claims 1 to 4, further comprising:
a cleaning liquid supply control unit configured to control the cleaning liquid supply unit and the flow channel switching unit such that if a temperature of cleaning liquid stored in the second storage unit is lower than a predetermined temperature at cleaning, cleaning liquid once sprayed into a cabinet of the cleaning apparatus from the second storage unit through the cleaning liquid spraying unit is stored in the first storage unit and reheated by the heating unit, and the reheated cleaning liquid is supplied to the cleaning liquid spraying unit.

7. The cleaning apparatus according to any one of claims 1 to 4, further comprising:
a cleaning liquid supply control unit configured to control the cleaning liquid supply unit and the flow channel switching unit such that if a remaining amount of cleaning liquid stored in the second storage unit is less than a predetermined remaining amount at cleaning, the cleaning liquid stored in the first storage unit and heated by the heating unit is supplied to the cleaning liquid spraying unit.

8. The cleaning apparatus according to any one of claims 1 to 4, further comprising:
a cleaning liquid discharge control unit configured to perform control to discharge the cleaning liquid stored in the second storage unit if the signal reception unit receives the surplus power generation notification signal during non-cleaning.

9. A cleaning method in a cleaning apparatus, comprising:
a step of receiving a surplus power generation notification signal indicating that surplus power is generated;
a step of heating cleaning liquid stored in a first storage unit configured to store the cleaning liquid when the surplus power generation notification signal is received;
a step of introducing the cleaning liquid from the first storage unit into a second storage unit configured to store, with heat insulation, the heated cleaning liquid stored in the first storage unit; and
a step of introducing the cleaning liquid stored in the first storage unit or the second storage unit and spraying the introduced cleaning liquid.
